# EUROPEAN PATENT APPLICATION

(11) **EP 4 496 081 A1**
(43) Date of publication of application: **22.01.2025**
(21) Application number: 24189023.5
(22) Date of filing: 16.07.2024
(51) Int. Cl.: H01M 14/00

(54) **MOISTURE-INDUCED ELECTRICAL POWER GENERATOR WITH IMPROVED POWER GENERATION PERFORMANCE AND HYDROGEN PRODUCTION SYSTEM USING THE SAME**

(30) Priority: 18.07.2023 KR 20230093294
(71) Applicant: Industry-Academic Cooperation Foundation Dankook University, Yongin-si, Gyeonggi-do 16890 (KR)
(72) Inventor: KIM, Jaeyup, 05086 Seoul (KR); JUNG, Sungmok, 13618 Gyeonggi-do (KR)
(74) Representative: Murgitroyd & Company

(57) **Abstract**

The present disclosure relates to a moisture-induced power generator with an improved power generation performance and a hydrogen production system using the same, and has an advantage in that an open-circuit voltage is improved by approximately 20% or more and a short current is improved by approximately 16.7 times compared to a moisture-induced power generator in related art through optimization of a mass ratio of carbon nanoparticles and surfactant, a composition of a solvent, the number of coating times of the carbon nanoparticles.

Further, a hydrogen production system using the moisture-induced power generator is provided to be used as a hydrogen production system in which hydrogen production is enabled at the same speed as a case of separately connecting an external power source, and power generation is enabled only with very low manufacturing cost of the moisture-induced power generator, and a very small amount of water.

## Description

### TECHNICAL FIELD

The present disclosure relates to a moisture-induced electrical power generator with improved power generation performance and a hydrogen production system using the same.

### BACKGROUND

In the case of a moisture-induced power generator using carbon nanoparticles, there are advantages such as cheap production costs and simple production processes, but there are limitations in power generation, such as a maximum power current value in a single cell being less than 1 mA. Therefore, in order to be used as a real power source, a system had to be configured by connecting numerous cells in series and in parallel, so there were problems such as a complex process and a large volume.

In addition, a solar hydrogen production system in related art has to be helped by most additional external power despite the use of solar energy, but the solar hydrogen production system has a limit in reducing hydrogen production cost. In the related art, a solar cell is connected to a solar hydrogen production element and is used as the additional power source, and through this, a method such as implementing a self driven system is developed, but the solar cell has a limit of manufacturing cost being comparatively expensive.

### Prior Art Document

### (Patent Document)

1. KR 10-2021-0135158 A
2. KR 10-2172609 B1
3. KR 10-2105762 B1

### (non-Patent Document)

1. Tae Gwang Yun, Jaehyeong Bae, Avner Rothschild, and Il-Doo Kim, Transpiration Driven Electrokinetic Power Generator, ACS Nano 2019, 13, 11, 12703-12709
2. Jaehyeong Bae, Tae Gwang Yun, Bong Lim Suh, Jihan Kim, and Il-Doo Kim, Self-operating transpiration-driven electrokinetic power generator with an artificial hydrological cycle, Energy Environ. Sci., 2020, 13, 527

### SUMMARY

In view of the above, the present disclosure provides a moisture-induced power generator showing an optimal electrochemical characteristic by adjusting a ratio and a composition of components of a moisture-induced power generator in order to improve the performance of the moisture-induced power generator.

An example of the present disclosure provides a method for manufacturing a moisture-induced self power generator, which includes: preparing a carbon nanoparticle solution by mixing carbon nanoparticles and surfactant in a solvent; and coating a cellulose fiber with the carbon nanoparticle solution.

Another example of the present disclosure provides a moisture-induced self power generator.

Yet another example of the present disclosure provides a solar hydrogen production system including the moisture-induced self power generator.

When a moisture-induced power generator according to an embodiment of the present disclosure is manufactured, an open-circuit voltage can be improved by approximately 20% or more, and a short current can be improved by approximately 16,7 times compared to a moisture-induced power generator in related art.

When hydrogen production is performed through the moisture-induced power generator according to an embodiment of the present disclosure, economical hydrogen production is possible due to high efficiency of the moisture-induced power generator because power generation is possible even with very low manufacturing cost of the moisture-induced power generator, and very small amount of water while hydrogen production is possible at the same speed as a case of separately connecting a general external power source.

### BRIEF DESCRIPTION OF THE DRAWINGS

FIG. 1A is a diagram illustrating a structure of a moisture-induced power generator element according to the present disclosure.
FIG. 1B is a photo showing connection of a wire to an actual moisture-induced power generator according to an embodiment of the present disclosure.
FIG. 2A is a graph showing a thickness, a weight, and a sheet resistance of an element measured while changing a mass ratio between carbon black and surfactant when manufacturing a moisture-induced power generator from 1:1 to 1:5 according to an embodiment of the present disclosure.
FIG. 2B is a graph showing an open-circuit voltage according to a time measured while changing the mass ratio between carbon black and surfactant when manufacturing the moisture-induced power generator from 1: 1 to 1:5 according to an embodiment of the present disclosure.
FIG. 2C is a graph showing a short current according to the time measured while changing the mass ratio between carbon black and surfactant when manufacturing the moisture-induced power generator from 1: 1 to 1:5 according to an embodiment of the present disclosure.
FIG. 3A is a graph showing an open-circuit voltage according to a time measured while changing a composition of a solvent (distilled water/ethanol volume ratio) when manufacturing the moisture-induced power generator according to an embodiment of the present disclosure.
FIG. 3B is a graph showing a short circuit according to a time measured while changing the composition of the solvent (distilled water/ethanol volume ratio) when manufacturing the moisture-induced power generator according to an embodiment of the present disclosure.
FIG. 3C is a graph showing a current-voltage curve while changing the composition of the solvent (distilled water/ethanol volume ratio) when manufacturing the moisture-induced power generator according to an embodiment of the present disclosure.
FIG. 3D is a graph showing a constituent element ratio measured with an EDS measured while changing the composition of the solvent (distilled water/ethanol volume ratio) when manufacturing the moisture-induced power generator according to an embodiment of the present disclosure.
FIG. 3E is a graph showing a thickness, a weight, and a sheet resistance of an element measured while changing the composition of the solvent (distilled water/ethanol volume ratio) when manufacturing the moisture-induced power generator according to an embodiment of the present disclosure.
FIG. 4A is a graph showing an open-circuit voltage according to a time measured while changing the number of iteration times during coating a carbon black solution on a cellulose fiber when manufacturing the moisture-induced power generator according to an embodiment of the present disclosure.
FIG. 4B is a graph showing a short circuit while changing the number of iteration times during coating the carbon black solution on the cellulose fiber when manufacturing the moisture-induced power generator according to an embodiment of the present disclosure.
FIG. 4C is a graph showing a current-voltage curve measured while changing the number of iteration times during coating the carbon black solution on the cellulose fiber when manufacturing the moisture-induced power generator according to an embodiment of the present disclosure.
FIG. 4D is a graph photographing that a crack is generated on the surface while the number of iteration times increases during coating the carbon black solution on the cellulose fiber when manufacturing the moisture-induced power generator according to an embodiment of the present disclosure.
FIG. 4E is a graph showing a thickness, a weight, and a sheet resistance of an element measured while changing the number of iteration times during coating the carbon black solution on the cellulose fiber when manufacturing the moisture-induced power generator according to an embodiment of the present disclosure.
FIG. 5 is a schematic view of a self driven solar hydrogen production system using a moisture-induced power generator according to the present disclosure.
FIG. 6 is a photo showing connection of three moisture-induced power generators in parallel according to an embodiment of the present disclosure.
FIG. 7 is a graph showing time-current, time-voltage, and time-power obtained from three moisture-induced power generators connected in parallel.
FIG. 8A is a graph showing a current-voltage curve of the moisture-induced power generator and a solar hydrogen production optical electrode according to an embodiment of the present disclosure.
FIG. 8B is a graph showing current density-time of the moisture-induced power generator and the solar hydrogen production optical electrode according to an embodiment of the present disclosure.
FIG. 8C is a graph showing enlargement of 0 to 17-minute interval in the current density-time graph of the moisture-induced power generator and the solar hydrogen production optical electrode according to an embodiment of the present disclosure.
FIG. 8D is a graph showing enlargement of an interval after 17 minutes in the current density-time graph of the moisture-induced power generator and the solar hydrogen production optical electrode according to an embodiment of the present disclosure.

### DETAILED DESCRIPTION

An example of the present disclosure provides a method for manufacturing a moisture-induced self power generator, which includes: preparing a carbon nanoparticle solution by mixing carbon nanoparticles and surfactant in a solvent; and coating a cellulose fiber with the carbon nanoparticle solution.

In the carbon nanoparticle solution, the carbon nanoparticles and the surfactant may be mixed in in the solvent at a mass ratio of 1:1 to 1:5, 1:1 to 1:4, 1:1 to 1:3, 1:2 to 1:5, 1:2 to 1:4, 1:2 to 1:3, 1:3 to 1:5, and 1:3 to 1:4, preferably, 1:31:1 to 1:5.

The carbon nanoparticles may be at least one selected from the group consisting of graphite, carbon black, graphene, fullerene, carbon fiber, carbon nanotubes, and active carbon, preferably, carbon black.

The surfactant may be at least any one selected from the group consisting of CPB, DTAB, TTAB, and CTAB, preferably CTAB, but is not limited thereto.

In the coating of the cellulose fiber with the carbon nanoparticle solution, the cellulose fiber may be coated with the carbon nanoparticle solution 1 to 20 times, 1 to 19 times, 1 to 18 times, 1 to 17 times, 1 to 16 times, 1 to 15 times, 1 to 14 times, 1 to 13 times, 1 to 12 times, 1 to 11 times, 1 to 10 times, 1 to 9 times, 1 to 8 times, 1 to 7 times, 1 to 6 times, 1 to 5 times, 2 to 20 times, 2 to 19 times, 2 to 18 times, 2 to 17 times, 2 to 16 times, 2 to 15 times, 2 to 14 times, 2 to 13 times, 2 to 12 times, 2 to 11 times, 2 to 10 times, 2 to 9 times, 2 to 8 times, 2 to 7 times, 2 to 6 times, 2 to 5 times, 3 to 20 times, 3 to 19 times, 3 to 18 times, 3 to 17 times, 3 to 16 times, 3 to 15 times, 3 to 14 times, 3 to 13 times, 3 to 12 times, 3 to 11 times, 3 to 10 times, 3 to 9 times, 3 to 8 times, 3 to 7 times, 3 to 6 times, 3 to 5 times, 4 to 20 times, 4 to 19 times, 4 to 18 times, 4 to 17 times, 4 to 16 times, 4 to 15 times, 4 to 14 times, 4 to 13 times, 4 to 12 times, 4 to 11 times, 4 to 10 times, 4 to 9 times, 4 to 8 times, 4 to 7 times, 4 to 6 times, 4 to 5 times, 5 to 20 times, 5 to 19 times, 5 to 18 times, 5 to 17 times, 5 to 16 times, 5 to 15 times, 5 to 14 times, 5 to 13 times, 5 to 12 times, 5 to 11 times, 5 to 10 times, 5 to 9 times, 5 to 8 times, 5 to 7 times, 5 to 6 times, 5 times, 10 to 20 times, 10 to 19 times, 10 to 18 times, 10 to 17 times, 10 to 16 times, 10 to 15 times, 10 to 14 times, 10 to 13 times, 10 to 12 times, 10 to 11 times, and 10 times, preferably, 15 times.

In the solvent, a ratio of distilled water and ethanol may be 1:9 to 9: 1, 2:8 to 8:2, 3:7 to 7:3, and 4:6 to 6:4, preferably 5:5.

Another example of the present disclosure provides a moisture-induced self power generator.

The moisture-induced self power generator has a higher power generation current value of a single cell than a moisture-induced power generator using carbon nanoparticles in related art, so the moisture-induced self power generator may be used as an actual power source, and has an advantage of cheap manufacturing cost and a simple manufacturing process.

Yet another example of the present disclosure provides a solar hydrogen production system including the moisture-induced self power generator.

1 to 5, 2 to 5, 3 to 5, 4 to 5, 1 to 4, 2 to 4, 2 to 3, 3 to 5, and 3 to 4, preferably, 3 moisture-induced self power generators may be connected in parallel, but are not limited thereto, and may be diversified according to a purpose or a size thereof.

The solar hydrogen production system may include an optical electrode in which the surface of a TiO₂ film is coated with quantum points.

Hereinafter, the present disclosure will be described in more detail through experimental examples and examples. However, the experimental examples and the examples are intended to exemplarily describe the present disclosure, and the scope of the present disclosure does not limit the experimental examples and the examples.
Further, if there is no special definition here, all scientific and technical terms used herein may have the same meaning as commonly understood by those skilled in the art in the technical field in which the present disclosure belongs.

### Example 1. Manufacturing moisture-induced self power generator

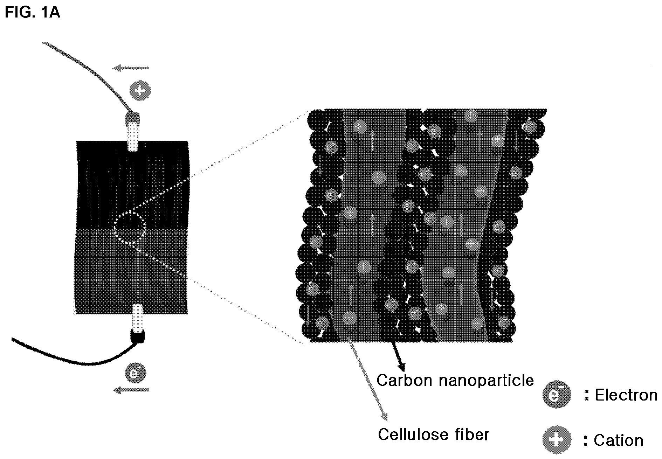

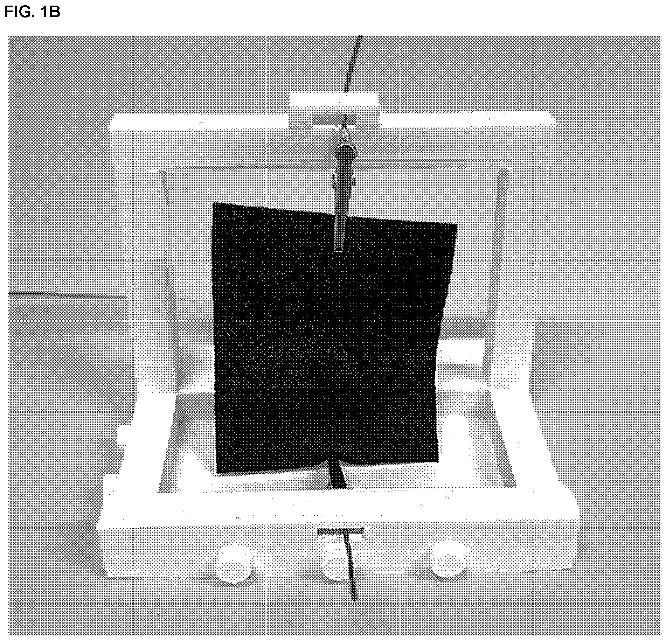

The moisture-induced power generator was manufactured by coating the surface of a cotton fiber (width × length × thickness: 5 cm × 7 cm × 0.12 mm)) consisting of the cellulose fiber with a carbon black (carbon nanoparticles) solution (FIG. 1A). The carbon block solution was melted in distilled water of 80 mL with a mass ratio of carbon block (CB, product name of Ketjenblack), and surfactant (hexadecyltrimethylammonium bromide (CTAB)), and dispersed by using an ultrasonic horn for 30 minutes. The cotton fiber is dipped in the prepared carbon black solution through a dip-coating method, and the carbon black was adsorbed on the surface, and then dried in an oven at 80°C for 30 minutes. After the carbon black is coated, UV/O3 processing was applied for 20 minutes in order to increase surface hydrophobicity of the cotton fiber coated with the carbon black, and then dipped in a polyvinyl alcohole (PVA) solution of 3 wt% for 30 seconds and taken out. Thereafter, the cotton fiber was dried in the oven at 80°C for 30 minutes. A plastic kit that manufactured the manufactured moisture-induced power generator was installed, and the wire was connected to both ends, and a saturated CaCl2 aqueous solution of 0.5 mL was sprayed and driven (FIG. 1B).

### Experimental Example 1. Confirming optimal mass ratio of carbon nanoparticles and surfactant

A sheet resistance, and an open-circuit voltage and a short current according to a time of the moisture-induced power generator were measured, which was measured while changing a mass ratio between the carbon black and the surfactant melted in the carbon black solution when manufacturing the moisture-induced power generator.

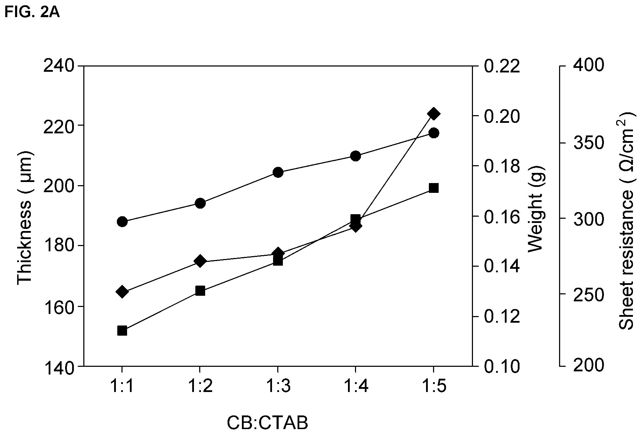

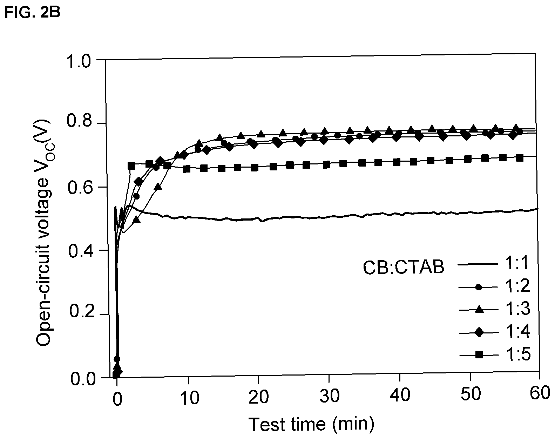

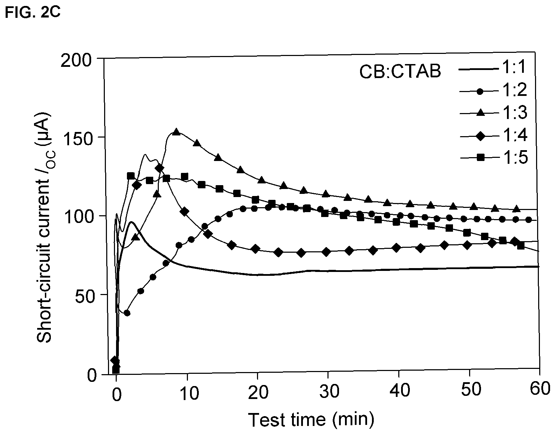

Overall, a thickness and a mass of the manufactured moisture-induced power generator were continuously increased as a content of the CTAB which is the surfactant (FIG. 2A). The reason is that as the content of the CTAB increases, the carbon black is more evenly dispersed, and as a result, more carbon black is coated on the cotton fiber. However, since the CTAB do not have conductivity, the sheet resistance of an element coated with the carbon black was continuously increased as the content increased. Highest open-circuit voltage and short circuit values were recorded in a condition in which the carbon black:CTAB mass ratio is 1:3 due to a trade-off relation. This is caused by a case where as the CTAB content increases, a coating amount of the carbon black increases, so a streaming potential and a streaming current increase when driving the moisture-induced power generator, and when an excessive CTAB content increases, the sheet resistance increases by a predetermined amount or more, so performance is reduced again.

### Experimental Example 2. Confirming optimal volume ratio of solvent

The carbon black:CTAB mass ratio was fixed to 1:3 which is a mass ratio representing a highest open-circuit voltage and a highest short current in Experimental Example 1, and an electrochemical characteristic was confirmed while changing a solvent composition to a condition of a volume ratio of distilled water:ethanol of 10:0, 7:3, 5:5, 3:7, and 0:10 when preparing the carbon black solution.

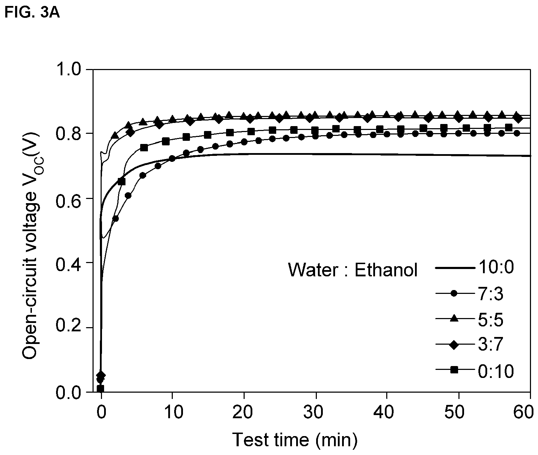

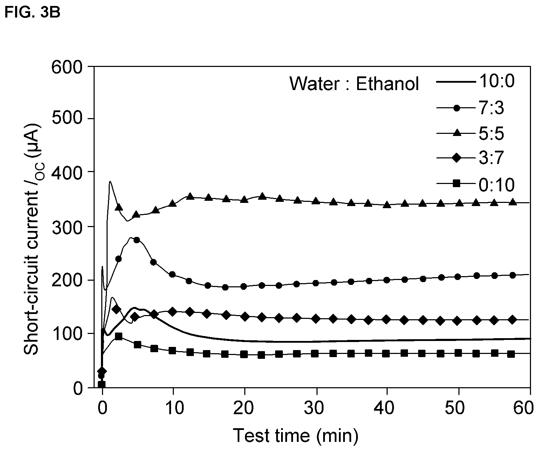

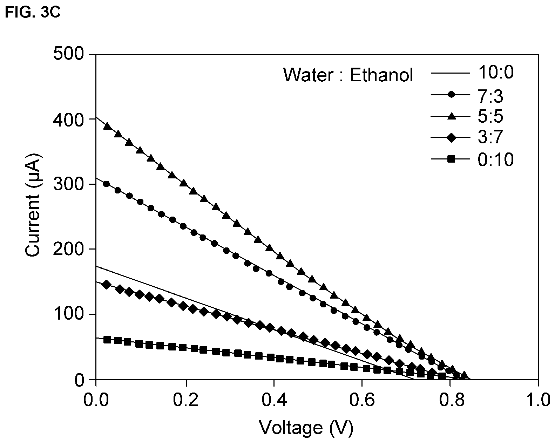

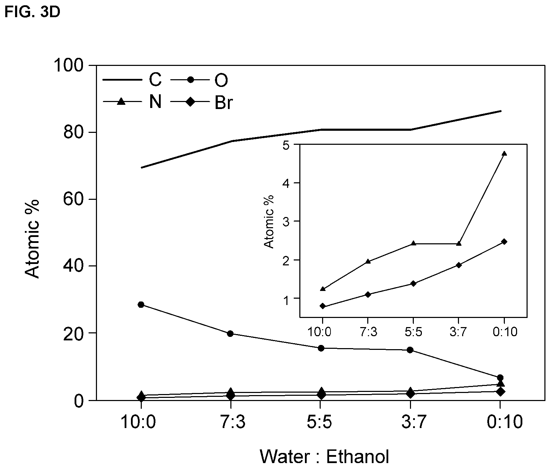

As a result of measuring the open-circuit voltage and the short circuit, a highest open-circuit voltage, a highest short circuit, and a highest current were represented in the condition of the volume ratio of the distilled water and the ethanol of 5:5 (FIGS. 3A, 3B, and 3C). According to an energy dispersive X-ray spectrometer (EDS) analysis result, when it is determined that contents of N and Br increase as a proportion of ethanol increases, the coating amount of the CTAB increases. At the same time, when it is considered that a ratio of C increases and a ratio of O decreases, the coating amount of the carbon black also increases similarly. That is, since the solubility of the carbon black is higher in ethanol than water, the ratio of ethanol increases, so carbon black is better dispersed in the solution, and as a result, a larger amount of carbon black is coated on the cotton fiber.

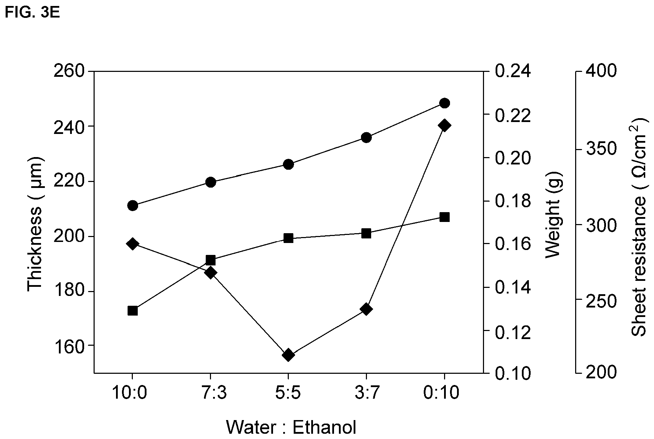

Accordingly, as the volume ratio of ethanol increased, the thickness and the mass of the element increased (FIG. 3E). However, the sheet resistance is minimized under the condition of the volume ratio of 5:5, and the sheet resistance of the element decreases due to the increased coating amount of carbon black during a process in which the volume ratio is changed from 10:0 to 5:5, and thereafter, the content of CTAB excessively increases, and the sheet resistance thus increases again during a process in which the volume ratio is changed from 3:7 to 0:10. Accordingly, it was formed that the power generation performance of the moisture-induced power generator was optimized under the 5:5 condition in which the sheet resistance was minimal.

### Experimental Example 3. Confirming the optimal number of coating times of carbon nanoparticles

The carbon black:CTAB mass ratio which is the optimal condition confirmed in Experimental Examples 1 and 2 was 1:3, and a ratio of mixed solutions was fixed to distilled water:ethanol = 5:5 (volume ratio), and the electrochemical characteristic was measured while changing the number of iteration times (cycle) of the coating process of the carbon black solution to 2 to 25 cycles.

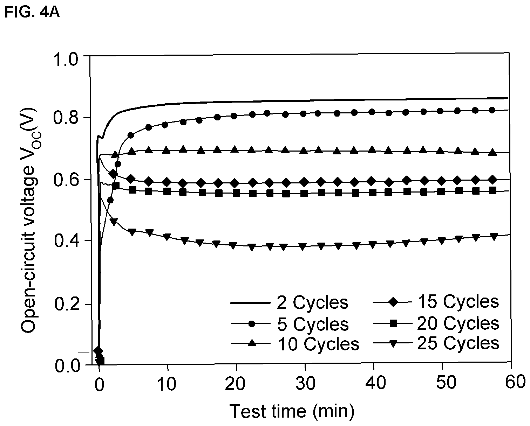

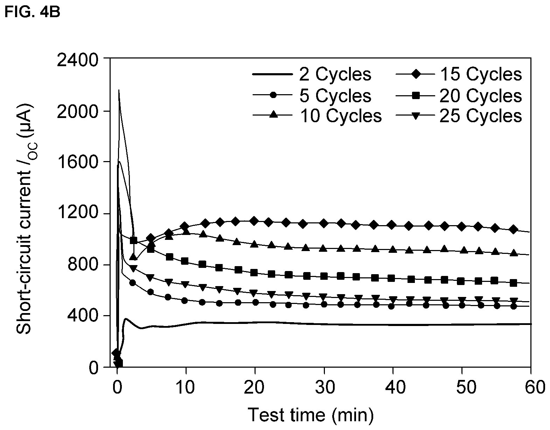

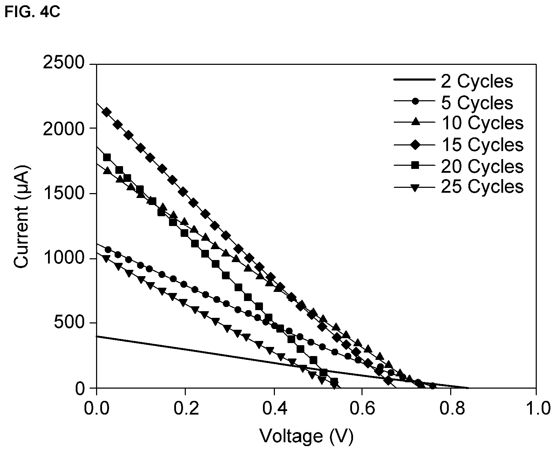

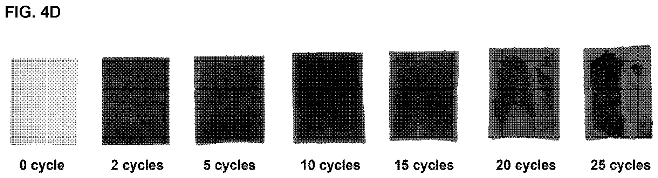

As the number of coating iteration times of carbon black increases, the open-circuit voltage decreased (FIG. 4A), but the short circuit tended to increase while the number of iteration times increased up to 15 cycles (FIG. 4B). Instead of slightly reducing the open-circuit voltage at 15 cycles compared to 2 cycles, the short circuit significantly increased, so the power to be maximized significantly increased (FIG. 4C).

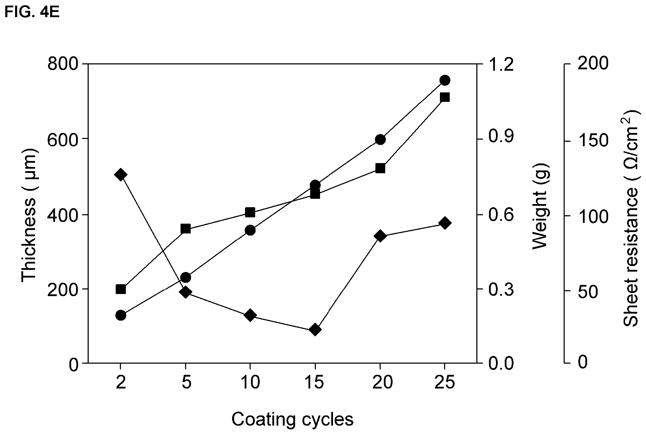

As the number of coating iteration times increased, the carbon black coating amount increased, so the thickness and the weight of the element increased, but when the cycle exceeded 15 cycles, it was observed that there was a crack on the surface. That is, when the cycle exceeded 15 cycles, the adhesion of a coated carbon black layer was unstable, and the sheet resistance was minimal under the condition of 15 cycles, and then tended to increase while the cycle increased (FIG. 4E). Accordingly, the power generation performance of the moisture-induced power generator shows the optimized performance at 15 cycles.

### Example 2. Manufacturing solar hydrogen production system using moisture-induced power generator

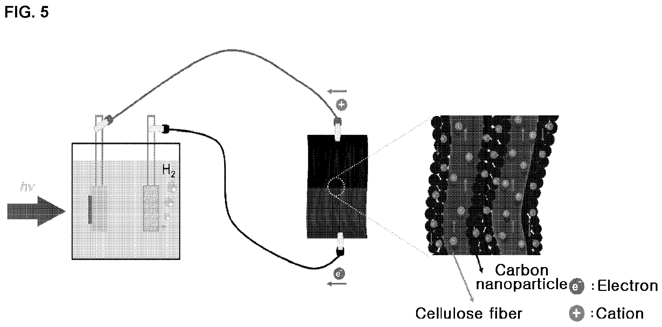

The solar hydrogen production system was designed by using the moisture-induced power generator adopting the experimental example (FIG. 5). The moisture-induced power generator was manufactured by coating the surface of a cotton fiber (width × length × thickness: 5 cm × 7 cm × 0.12 mm)) consisting of the cellulose fiber with a carbon black solution. The carbon block solution was melted in a mixed solvent of water and ethanol (volume ratio of 1:1) with a mass ratio of carbon block (CB, product name of Ketjenblack) of 0.3 g, and surfactant (hexadecyltrimethylammonium bromide (CTAB)) of 0.9 g, and dispersed by using an ultrasonic horn for 30 minutes. The cotton fiber is dipped in the prepared carbon black solution through the dip-coating method, and the carbon black was adsorbed on the surface, and then dried in an oven at 80°C for 30 minutes. This process was repeated 15 times so that a sufficient quantity of carbon particles could be adsorbed onto the surface. Thereafter, UV/O3 processing was applied for 20 minutes in order to increase surface hydrophobicity of the cotton fiber coated with the carbon black, and then dipped in the PVA solution of 3 wt% for 30 seconds and taken out. Thereafter, the cotton fiber was dried in the oven at 80°C for 30 minutes.

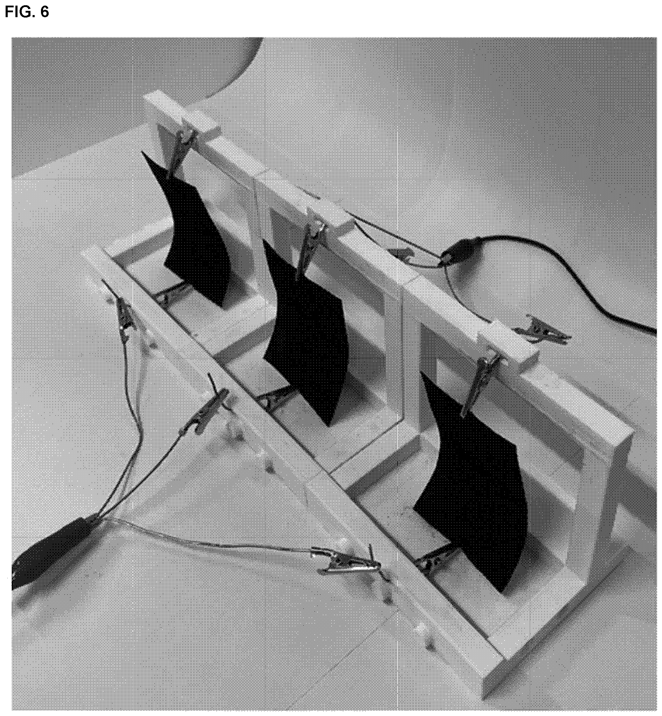

Thee manufactured moisture-induced power generators were connected in parallel, and then connected to electro-optic hydrogen production cells (FIG. 6). In order to manufacture an operating electrode of electro-optic chemical hydrogen production, a fluorine tin oxide (FTO) substrate was coated with a porous TiO₂ film, and dipped in a quantum point solution for 24 hours to adsorb quantum points. Thereafter, by repeating a process of successively dipping the fluorine tin oxide (FTO) substrate coated with the porous TiO₂ film in a Zn(NO₃)₂ ethanol solution of 0.05 M and a Na₂S ethanol solution of 0.05 M for 1 minute 3 times, a ZnS layer was formed by a successive ionic layer adsorption and reaction (SILAR) method. Further, a platinum (Pt) mesh was used as a counter electrode, and an aqueous solution melted with 0.25 M Na₂S and 0.35 M Na₂SO₃ was used as an electrolyte. As a light source, an artificial light source in a condition of AM 1.5 G and 1 sun (100 mW/cm²) was used.

### Experimental Example 4. Confirming electrochemical characteristics of three moisture-induced power generators connected in parallel

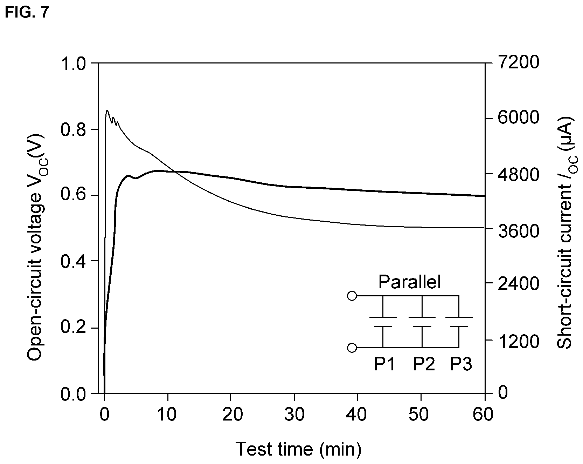

A saturated CaCl₂ aqueous solution of 0.5 mL was sprayed to a lower part of each moisture-induced power generator manufactured in Example 2 by using a dropper, and the short current and open-circuit voltage generated by moisture-induced power generator systems connected in parallel were measured for 1 hour (FIG. 7). The open-circuit voltage initially increased and maintained a value of approximately 0.6 to 0.65 V, and a value of the short current was initially recorded as a value of up to 6 mA, and decreased over time, and after approximately 1 hour elapsed, recorded as a value of approximately 3.6 mA.

### Experimental Example 5. Confirming electro-optic chemical of hydrogen production system

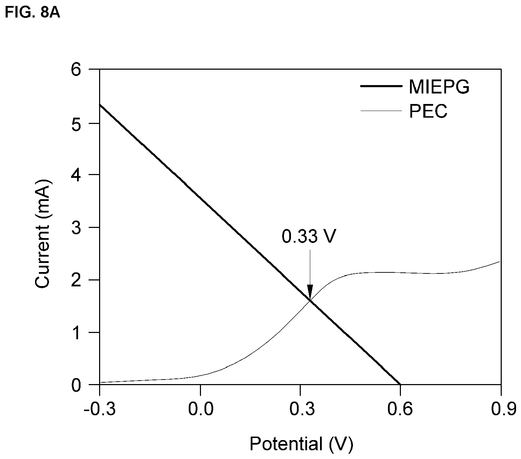

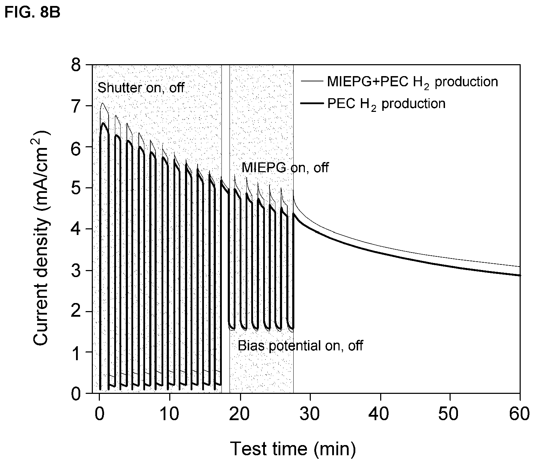

The moisture-induced power generation systems connected in parallel were used as the power source, and connected to the electro-optic chemical hydrogen production cells, and then the electro-optic chemical characteristics were measured. A voltage at an intersection point was measured as 0.33 V and a current was measured as 1.6 mA in an I-V curve of the parallel connected moisture-induced power generators, and the electro-optic chemical hydrogen production cells. Accordingly, the voltage of approximately 0.33 V was applied to the electro-optic chemical hydrogen production cell by the moisture-induced power generator, and hydrogen production was made by the current of approximately 1.6 mA (FIG. 8A). A graph (PEC H₂ production) in which electro-optic chemical hydrogen production was conducted by an external voltage (0.33 V) by an instrument by a general method, and a graph (MIEPG+PEC H2 production) in which the electro-optic chemical hydrogen production was conducted by using a moisture-induced power generator manufactured in this study instead of the external voltage were compared (FIG. 8B).

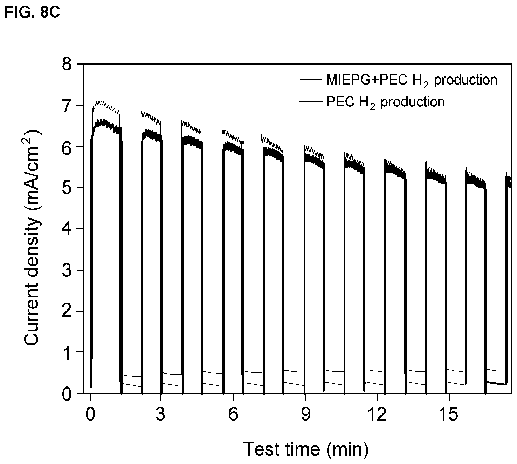

When on/off a shutter of the light source was initially repeated at a cycle of 1 minute for approximately 17 minutes (FIG. 8C), in a case where light is irradiated when applying the external voltage, an initial current density of 6.5 mA/cm² was changed to a current density of 4.75 mA/cm² after 17 minutes, and when light was removed, a dark current of approximately 0.17 mA/cm² was generated. It is estimated that a tendency in which the current density is reduced from an initial value over time is caused by photocorrosion of quantum points. Further, the case where the electro-optical chemical hydrogen production was conducted by using connecting the moisture-induced power generator also showed a similar result, and when the light is irradiated, the initial current density of 7.0 mA/cm² was changed to a current density of 5.3 mA/cm² after 17 minutes, and when the light is removed, a dark current of approximately 0.50 mA/cm² was generated.

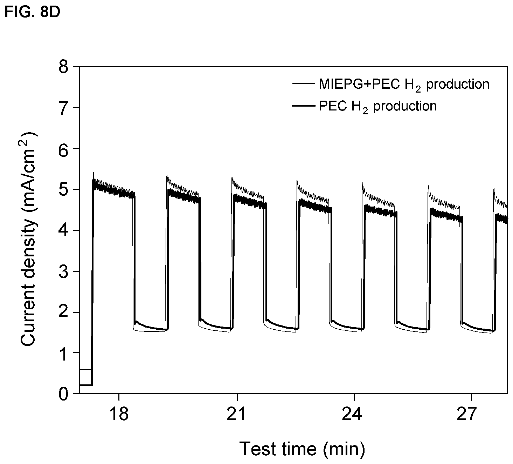

When on/off of the external voltage or the moisture-induced power generator is repeated at a cycle of 1 minute at an interval between 17 minutes and approximately 28 minutes (FIG. 8D), an initial current density of 4.75 mA/cm² was changed to a current density of 4.0 mA/cm² after 10 minutes elapsed when applying the external voltage, and a current density of approximately 1.5 mA/cm² was generated only by irradiated light when removing the external voltage. Further, the case where the electro-optical chemical hydrogen production was conducted by using connecting the moisture-induced power generator also showed a similar result, and an initial current density of 5.3 mA/cm² was changed to a current density of 4.6 mA/cm² after 10 minutes, and when the external voltage is removed, a current density of approximately 1.5 mA/cm² was generated only by the irradiated light. As such, it was confirmed that the moisture-induced power generator manufactured in Example 3 may be sufficiently used as the power source for conducting the electro-optic chemical hydrogen production instead of an external power source generally connected for hydrogen production.

## Claims

1. A method for manufacturing a moisture-induced self power generator, the method comprising:
preparing a carbon nanoparticle solution by mixing carbon nanoparticles and surfactant in a solvent; and
coating a cellulose fiber with the carbon nanoparticle solution.

2. The method of claim 1, wherein the carbon nanoparticle solution is prepared by mixing the carbon nanoparticles and the surfactant in the solvent at a mass ratio of 1:1 to 1:5.

3. The method of claim 1 or 2, wherein in the coating of the cellulose fiber with the carbon nanoparticle solution, the cellulose fiber is coated with the carbon nanoparticle solution 10 times to 16 times.

4. The method of claims 1 to 3, wherein in the solvent, a ratio of distilled water and ethanol is 4:6 to 6:4.

5. The method of claims 1 to 4, wherein the carbon nanoparticles include at least one selected from the group consisting of graphite, carbon black, graphene, fullerene, carbon fiber, carbon nanotubes, and active carbon.

6. A moisture-induced self power generator manufactured by the method of claims 1 to 5.

7. A solar hydrogen production system including the moisture-induced self power generator of claim 6.

8. The solar hydrogen production system of claim 7, wherein 1 to 5 moisture-induced self power generators are connected in parallel.

9. The solar hydrogen production system of claim 7 or 8, wherein the solar hydrogen production system includes an optical electrode in which the surface of a TiO₂ film is coated with quantum points.
